# EUROPÄISCHE PATENTSCHRIFT

(11) **EP 0 578 114 B1**
(45) Veröffentlichungstag und Bekanntmachung des Hinweises auf die Patenterteilung: **07.12.1994**
(21) Anmeldenummer: 93110413.7
(22) Anmeldetag: 30.06.1993
(51) Int. Cl.: B60K 26/02

(54) **Pedalwertgeber für Fahrzeuge mit einer Brennkraftmaschine**
Pedal angle sensor for vehicles with internal combustion engine
Capteur d'angle d'accélérateur pour véhicules à moteur à combustion interne

(30) Priorität: 10.07.1992 DE 4222680
(43) Veröffentlichungstag der Anmeldung: 12.01.1994
(73) Patentinhaber: PIERBURG GMBH, 41460 Neuss (DE)
(72) Erfinder: Wiesjahn, Klaus, D-4000 Düsseldorf (DE)

(56) Entgegenhaltungen:
- EP-A- 0 092 640
- DE-C- 2 843 456
- FR-A- 2 562 010

## Beschreibung

Die Erfindung betrifft einen Pedalwertgeber für Fahrzeuge mit einer Brennkraftmaschine nach dem Oberbegriff des Patentanspruchs 1.

Ein derartiger Pedalwertgeber ist als Stellungsgeber zum Beeinflussen der Fahrgeschwindigkeit eines Kraftfahrzeuges aus der DE-C-28 43 456 bekannt, bei dem die Kickdown-Schwelle durch eine Kugel-Nutraste bestimmt wird, bei der die Axialverstellung eines die Rückstellfedern abstützenden, mit der Geberwelle verbundenen Drehkörpers auf einen Schalter einwirkt, der die Kickdown-Schwelle elektrisch meldet. In dieser Druckschrift ist angegeben, daß ein gewünschtes Ansteigen der Betätigungskraft an der Kickdown-Schwelle ohne Schwierigkeit allein durch Wahl von Form und Durchmesser des Rollkörpers und des Nutendes festgelegt werden kann.

Bei dieser Ausführung besteht der Nachteil, daß beim Überschreiten der Schwelle eine Axialverstellung erfolgt, der der mit dem Fahrpedal verbundene Stellhebel folgt. Hierdurch ist einmal eine auf das Übertragungsgestänge übertragene, nicht funktionsgerechte Bewegung verursacht und zum anderen wird im Kickdownbereich eine gewünschte Reibung, die durch Anlage des Drehkörpers an der Axialwand des Gehäuses erzeugt wird, aufgehoben.

Hiervon ausgehend liegt der Erfindung daher die Aufgabe zugrunde, einen gattungsgemäßen Pedalwertgeber derart zu gestalten, daß die Reibung über den gesamten Stellbereich des Pedalwertgebers und keine Axialverstellung des Stellhebels mehr vorliegt. Darüber hinaus soll der neue Pedalwertgeber eine kostengünstige Montage ermöglichen.

Diese Aufgabe ist durch die im Kennzeichen des Patentanspruchs 1 angegebenen Merkmalen gelöst worden. Vorteilhafte Weiterbildungen sind mit den Unteransprüche angegeben.

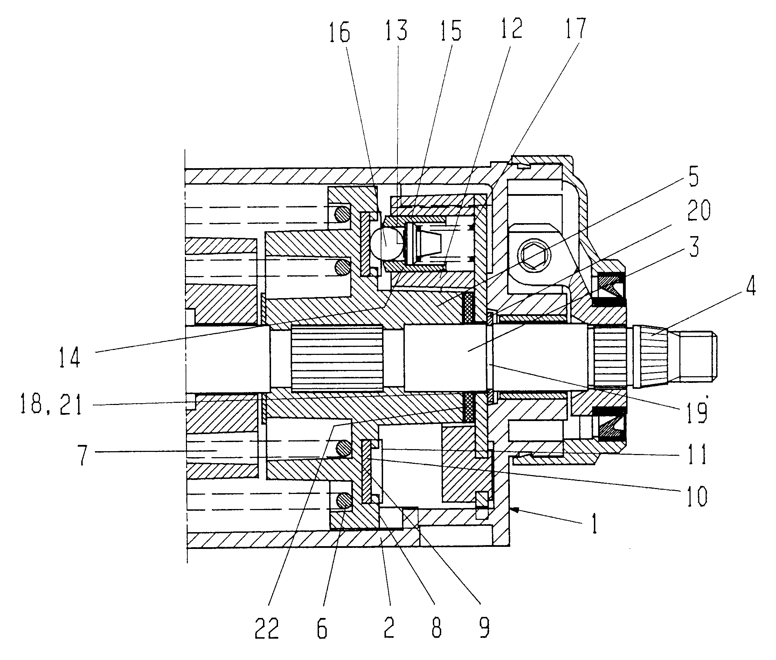

Ein Ausführungsbeispiel der Erfindung ist in der Zeichnung dargestellt und wird nachfolgend beschrieben.

Die Zeichnung zeigt einen Teilschnitt durch einen erfindungsgemäßen Pedalwertgeber 1, bestehend aus einem Gebergehäuse 2, in dem eine Geberwelle 3 gelagert ist, die an ihrem äußeren Ende 4 für die Befestigung eines mit dem Fahrpedal eines Fahrzeuges verbundenen Stellhebels (nicht dargestellt) ausgebildet ist.

Ein mit der Geberwelle 3 fest verbundener Drehkörper 5 nimmt einerseits Rückstellfedern 6, 7 auf, die den Drehkörper 5 radial und axial belasten, so daß eine reibungsbehaftete Rückstellkraft am Stellhebel erzeugt wird.

Erfindungsgemäß weist der Drehkörper 5 andererseits auf einer Axialfläche 8 eine in einer Nut 9 eingebettete, geprägte, metallische Rastenscheibe 10 mit einer Raste 11 auf, die mit dem Drehkörper 5 verspritzt ist oder andersartig mit diesem verbunden sein kann. In dem Gebergehäuse 2 ist ein unverdrehbar, jedoch axial verschieblich geführter Körper 12 angeordnet, der mit einem oder mehreren umfangsmäßig gleichmäßig verteilten Feder-Kugelelementen 13 ausgestattet ist, die mittels einer in Axialausnehmungen 14 des Körpers 12 eingepreßten Hülsen 15 gehalten sind.

Die Feder-Kugelelemente 13 stützen sich unter Verformung der Feder 17 mit der Kugel 16 an der Rastenscheibe 10 ab, so daß der Körper 12 unter der Kugelauflagekraft gegen einen Bund 18 der Geberwelle 3 anliegt. Der Bund 18 ist bei dieser Ausführung durch eine in einer Nut 19 der Geberwelle 3 eingesetzte Sicherungsscheibe gebildet.

Der Körper 12 ist in dem Anlagebereich 21 des Bundes 18 bzw. der Sicherungsscheibe 20 aus einem metallischen Werkstoff, z. B. Stahl ausgeführt. Gegen diesen metallischen Bereich stützt sich auch eine Reibscheibe 22 ab, die zwischen dem durch die Rückstellfedern 6, 7 axial belasteten Drehkörper 5 und dem Körper 12 angeordnet ist, so daß die erwähnte Reibung bei der Verstellung besteht.

Der Körper 12 ist vorteilhafterweise aus Verbundguß -Metall und Kunststoff- hergestellt.

Der Pedalwertgeber 1 weist desweiteren einen elektrischen Stellungssensor und u. U. auch einen elektrischen Schalter auf, die jedoch nicht dargestellt sind, da kein direkter Zusammenhang zu der Erfindung besteht.

Bei der Betätigung des Pedalwertgebers 1, in der Regel durch den Fahrzeugbetreiber, wird der Stellhebel verstellt. Hierbei ist die durch die Rückstellfedern 6, 7 bewirkte Rückstellkraft zu überwinden. Um geringe Verstellungen, z. B. durch Schwingungen verursachte, zu unterdrücken, ist die Rückstellkraft mit der erwähnten, an der Reibscheibe entstehenden Reibkraft behaftet (Hysterese).

Erfolgt eine Verstellung in den Vollastbereich der Brennkraftmaschine, dann ist eine sogenannte Kickdown-Schwelle zu überschreiten. Diese Kickdown-Schwelle ist durch das Auftreffen der Feder-Kugelelemente auf die in der Rastenscheibe aus- bzw. eingeprägten Rasten bestimmt, bei deren Überwindung kurzzeitig eine Verstellkrafterhöhung entsteht, die bei eingefederten Feder-Kugelelementen 13 beendet ist. Bei Verstellung über die Kickdown-Schwelle hinaus ist wiederum nur die durch die Rückstellfedern 6 und 7 bewirkte Rückstellkraft zu überwinden. Die durch die Feder-Kugelelemente 13 erzeugte Abstützkraft wird durch die Anlage des Körpers 12 an dem Bund 18 bzw. der Sicherungsscheibe 20 der Geberwelle 3 aufgehoben, so daß dadurch die Geberwelle 3 keine zusätzlichen Axialkräfte aufnehmen muß und auch keine Axialbewegung der Geberwelle 3 vorliegt.

Mit dem vorliegenden Pedalwertgeber ist eine einfach zu montierende Lösung gefunden worden.

## Patentansprüche

1. Pedalwertgeber für Fahrzeuge mit einer Brennkraftmaschine, bei dem neben einer reibungsbehafteten Rückstellkraft eine Kickdown-Schwelle überwunden werden muß, die durch eine Kugel-Nutraste gebildet ist, dadurch gekennzeichnet, daß ein auf der Geberwelle (3) befestigter, Rückstellfedern (6, 7) abstützender Drehkörper (5) auf der den Rückstellfedern (6, 7) abgewandten Axialfläche (8) eine in einer Nut (9) eingebettete, geprägte, metallische Rastenscheibe (10) aufweist, daß ein im Gebergehäuse (2) unverdrehbar, jedoch axial beweglich geführter Körper (12) angeordnet ist, der wenigstens ein in Axialrichtung der Geberwelle (3) angeordnetes Feder-Kugelement (13) aufweist, das mit der Rastenscheibe (10) zusammenwirkt,
wobei der Körper (12) unter der an der Rastenscheibe (10) bewirkten Kugel-Auflagekraft an einem Bund (18) der Geberwelle (3) anliegt.

2. Pedalwertgeber nach Anspruch 1, dadurch gekennzeichnet, daß der Drehkörper (5) unter der Axialkraft der Rückstellfedern (6, 7) gegen eine Reibscheibe (22) anliegt, die sich andererseits an den Körper (12) abstützt.

3. Pedalwertgeber nach Anspruch 2, dadurch gekennzeichnet, daß der Körper (12) im Bereich des Bundes (18) der Geberwelle (3) und der Reibscheibe (22) aus Metall besteht.

4. Pedalwertgeber nach Anspruch 3, dadurch gekennzeichnet, daß der Körper (12) aus Verbundguß -Metall und Kunststoff- besteht.

5. Pedalwertgeber nach einem der vorstehenden Ansprüche, dadurch gekennzeichnet, daß das Feder-Kugelemenent (13) mittels einer in den Körper (12) gepreßten Hülse (15) gehalten ist.

## Claims

1. Pedal sensor for vehicles with an internal combustion engine, in which, besides a restoring force with a friction component, a kick-down threshold formed by a ball-and-groove catch has to be surmounted, characterized in that a body of revolution (5), which is fastened on the sensor shaft (3) and supports restoring springs (6, 7), has on the axial face (8) remote from the restoring springs (6, 7) an embossed metal detent disk (10) which is embedded in a groove (9), that a body (12) is disposed guided non-rotatably but in an axially movable manner in the sensor housing (2), said body having at least one spring-loaded ball element (13), which is disposed in an axial direction of the sensor shaft (3) and cooperates with the detent disk (10),
the body (12) under the ball bearing pressure effected at the detent disk (10) being applied against a collar (18) of the sensor shaft (3).

2. Pedal sensor according to claim 1, characterized in that the body of revolution (5) under the axial thrust of the restoring springs (6, 7) is applied against a friction disk (22), which on the other hand is supported on the body (12).

3. Pedal sensor according to claim 2, characterized in that the body (12) in the region of the collar (18) of the sensor shaft (3) and the friction disk (22) is made of metal.

4. Pedal sensor according to claim 3, characterized in that the body (12) comprises a composite - metal and plastic - casting.

5. Pedal sensor according to one of the preceding claims, characterized in that the spring-loaded ball element (13) is held by means of a sleeve (15) which is pressed into the body (12).

## Revendications

1. Capteur d'angle d'accélérateur pour véhicules équipés d'un moteur à combustion interne, sur lequel un seuil kick down, défini par un cran d'arrêt à bille, doit être surmonté en dehors d'une force de rappel entachée de friction, caractérisé en ce qu'un corps rotatif (5), fixé sur l'axe (3) du capteur et supportant des ressorts de rappel (6, 7), présente, sur la surface axiale (8) opposée aux ressorts (6, 7), un disque à crans métallique (10) estampé, encastré dans une rainure (9), en ce qu'un corps (12) est disposé sans possibilité de rotation dans le boîtier (2) du capteur, mais est guidé dans le sens axial, ce corps présentant un élément sphérique à ressort (13), au moins, disposé dans le sens axial de l'axe (3) du capteur et concourant avec le disque à crans (10), le corps (12) s'appliquant sur un collet (18) de l'axe (3) du capteur, sous l'effet de la force d'appui de la bille provoquée sur le disque à crans (10).

2. Capteur d'angle d'accélérateur suivant la revendication 1, caractérisé en ce que le corps rotatif (5) s'applique sur un disque de friction (22) sous l'effet de la force axiale des ressorts de rappel (6, 7), ce disque s'appuyant par ailleurs sur le corps (12).

3. Capteur d'angle d'accélérateur, caractérisé en ce que le corps (12) se compose de métal dans la zone du collet (18) de l'axe (3) du capteur et du disque de friction (22).

4. Capteur d'angle d'accélérateur suivant la revendication 3, caractérisé en ce que le corps (12) se compose de fonte composite, métal et plastique.

5. Capteur d'angle d'accélérateur, caractérisé en ce que l'élément sphérique à ressort (13) est maintenu par une douille (15), emmanchée dans le corps (12).
